# EUROPÄISCHE PATENTSCHRIFT

(11) **EP 1 888 370 B1**
(45) Veröffentlichungstag und Bekanntmachung des Hinweises auf die Patenterteilung: **27.08.2008**
(21) Anmeldenummer: 06754063.3
(22) Anmeldetag: 02.06.2006
(51) Int. Cl.: B60P 7/08

(54) **GURTÖSE**
BELT EYE
OEILLET

(30) Priorität: 10.06.2005 DE 102005026964
(43) Veröffentlichungstag der Anmeldung: 20.02.2008
(73) Patentinhaber: Trade World One GmbH, 40229 Düsseldorf (DE)
(72) Erfinder: BRÜCKNER, Rolf, 42549 Velbert (DE); BERGHOFF, Werner, 42553 Velbert (DE)
(74) Vertreter: Stratmann, Ernst
(86) Internationale Anmeldenummer: PCT/EP2006/005262
(87) Internationale Veröffentlichungsnummer: WO 2006/131270

(56) Entgegenhaltungen:
- DE-C1- 3 803 248
- DE-U1- 8 618 070
- DE-U1- 29 500 242
- DE-U1- 29 911 871
- US-A- 3 377 039

## Beschreibung

### Hintergrund der Erfindung

Die Erfindung betrifft eine Öse für einen Haltegurt, umfassend ein wannenförmiges Gehäuse, in dem ein Klappbügel gegen Federkraft ausklappbar gelagert ist, und eine Arretierungseinrichtung, die den Klappbügel in ausgeklappter Stellung festhält.

### Kurze Beschreibung des Standes der Technik

Eine derartige Gurtöse ist der Anmelderin bereits bekannt. Der Klappbügel ist mit dem Gehäuse mittels einer Stahlachse scharnierartig verbunden. Die Achse ist gleichzeitig Träger eine Drehfeder und dient weiterhin zur Aufnahme eines Kunststoffrastteiles. Diese Einzelteile bewirken im Zusammenspiel nachfolgende Funktionen:
a) Es ergibt sich eine federfixierte Ruhestellung des Bügels in Parallellage zum Gehäuse,
b) sowie eine rastfixierte Gebrauchslage des Bügels in einer Schwenkstellung zum Gehäuse von beispielsweise 85°.

Nachteilig ist, daß die Montage der vorgenannten Einzelteile besonders durch die Einbausituation der vorgespannten Drehfeder und das notwendige Einfädeln der Achse durch die restlichen Bauteile kompliziert und zeitaufwendig ist.

Einige gattungsgemässe Ösen sind in den Dokumenten US3377 039, DE 38 03 248, EP 1568 540, DE 299 11 871 U und DE 295 00 242 U offen bart.

### Aufgabe der Erfindung

Aufgabe der Erfindung ist es, diese Nachteile zu vermeiden und mit weniger Bauteilen und weniger Montageaufwand die gleichen Funktionen zu realisieren, wie sie oben angegeben sind.

### Lösungswege

Gelöst wird die Aufgabe dadurch, daß die Federkraft von einer parallel zur Klappachse des Klappbügels angeordneten Blattfeder geliefert wird, die an einer von der Klappachse vorspringenden Nase derart in Eingriff genommen wird, daß die Blattfeder während eines ersten, größeren Teils der Klapphebelbewegung zunehmend gespannt wird, und während eines daran anschließenden, kleineren Teils der Klapphebelbewegung wieder geringfügig entspannt wird. Die besonder Form der Feder ermöglicht die Vermeidung der Umstände der zu montierenden Drehfeder wie auch das besondere Rastteil und erspart somit ein Bauteil und einen Montageschritt bei der Herstellung der Öse.

Wie beim Stand der Technik bilden die zwei sich gegenüberliegenden Seitenwände des Gehäuses ein Lager für die Enden der Klapphebelachse, wobei sich weitere Vorteile dadurch ergeben, daß die Aufnahmen für die Enden der Klapphebelachse jeweils von dem Endbereich einer Nut gebildet wird, die im Bodenbereich der Seitenwand einen offenen Zugang für das Wellenende bildet und im Gehäuseflanschbereich eine Abschlußwand bildet, und daß im Abstand zu der Abschlußwand ein zur Nut quer verlaufender Schlitz vorgesehen ist, in den das Ende der Blattfeder einsteckbar ist. Durch diese Merkmale wird die Stahlachse entbehrlich und es fällt damit ein weiteres Teil kostensparend sowie der zugehörige Montageschritt ebenfalls kostensparend weg.

Bei dem der Anmelderin bekannten Stand der Technik weist das Gehäuse und der Klapphebel oder Klappbügel gegenseitige Anschlagflächen auf, die den Schwenkweg des Klappbügels begrenzen. Am günstigsten ist es, wenn die Anschlagflächen des Gehäuses von einem vom Gehäuseboden ausgehenden Anschlagnocken gebildet wird. Dieser Anschlagnocken ist mit dem Gehäuse bzw. dem Klappbügel einstückig und erhöht dadurch die Bauteilanzahl und den Montageaufwand nicht.

Wie beim Stand der Technik weist der Boden des Gehäuses Bohrungen zur Aufnahme von Befestigungsschrauben auf.

### Kurze Beschreibung der Zeichnungen

Die Erfindung wird nachfolgend anhand von Ausführungsbeispielen näher erläutert, die in den Zeichnungen dargestellt sind.

Es zeigt:
- Fig. 1A: eine Draufsicht,
- Fig. 1B: eine Querschnittsansicht und
- Fig. 1C: eine Ansicht von der Seite einer erfindungsgemäß ausgestalteten Öse für einen Haltegurt;
- Fig. 2A, 2B, 2C und 2D: verschiedene Ansichten des Gehäuses der Ausführungsform gemäß Fig. 1A bis 1C;

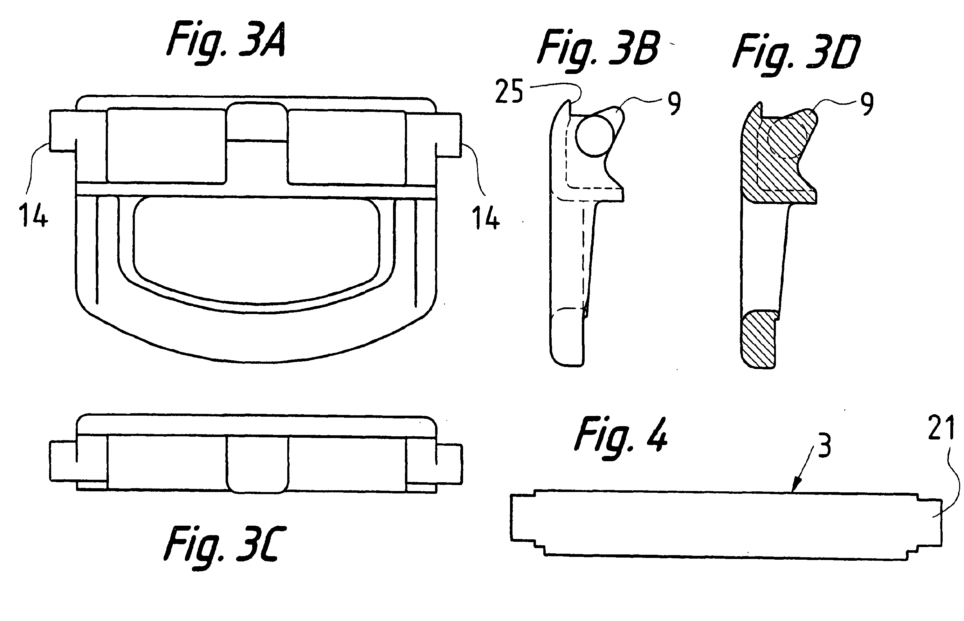

- Fig. 3A, 3B, 3C und 3D: verschiedene Ansichten des Klapphebels der Ausführungsform gemäß Fig. 1A bis 1C; und
- Fig. 4: eine Draufsicht auf die Blattfeder.

### Detaillierte Beschreibung der Erfindung

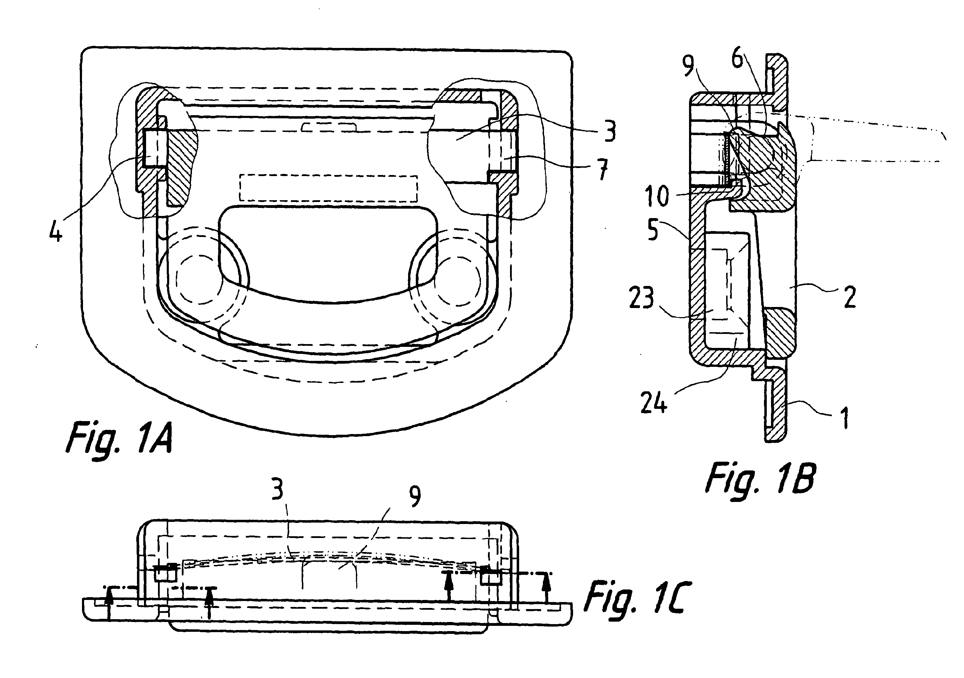

Die in den Fig. 1A, 1B und 1C in einer Draufsicht, Querschnittsansicht und Seitenansicht dargestellte Gurtöse besteht aus einem wannenförmigen Gehäuse 1, in dem ein Klappbügel 2 gegen Federkraft einer Blattfeder 8 ausklappbar angeordnet ist, siehe die gestrichelten Linien. Wie die Fig. 1B erkennen läßt, wird die Blattfeder 8 von einer von der Klapphebelachse 14 vorspringenden Nase 9, derart in Eingriff genommen, daß die Blattfeder 9 während eines ersten, größeren Teils des Klappbewegungsweges (von der Fig. 1B in durchgezogenen Linien gezeigte Stellung in die in der Fig. 1B gepunktet dargestellten Stellung) zunehmend gespannt wird, indem nämlich die Nase 9 die Feder 8 in der Mitte nach unten drückt und dadurch spannt. Während des daran anschließenden kleinen Teils des Bewegungsweges wird diese Feder 8 wieder etwas entspannt, und zwar dadurch, daß die Nase 9 über den Totpunkt hinaus gelangt, bei der die Nase die Feder maximal spannt.

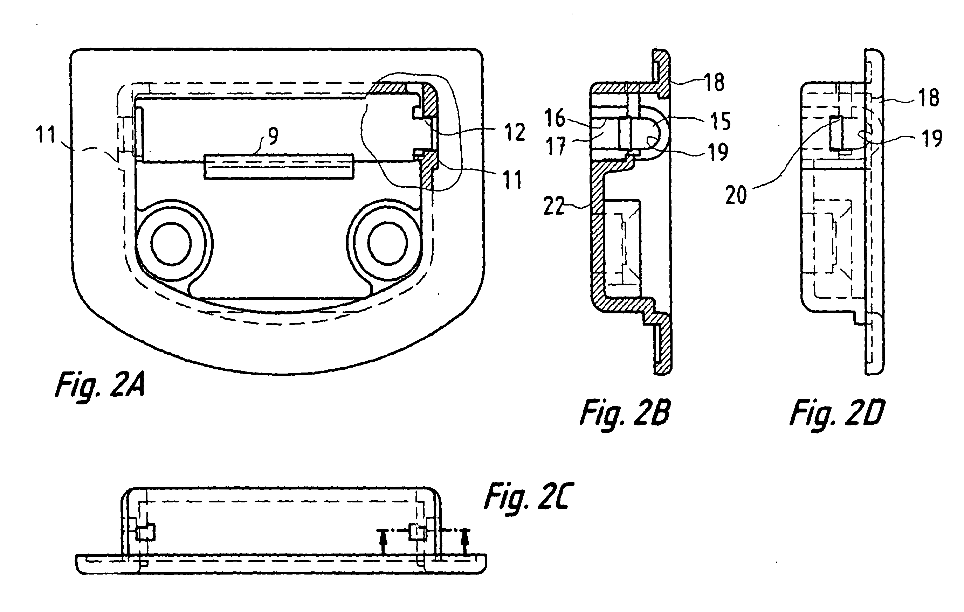

Das Gehäuse 1, das in der Fig. 2A in einer Draufsicht, in der Fig. 2B in einer Querschnittsansicht, in der Fig. 2C in einer Ansicht von der Rückseite und in der Fig. 2D von der Seite dargestellt ist, weist an zwei sich gegenüberliegenden Seitenwänden als Lager dienende Aufnahmen für die Enden 13 der Klapphebelachse 14 auf. Die Aufnahme 12 für die Enden 13 der Klapphebelachse 14 wird von dem Endbereich 15 einer Nut 16 gebildet, die im Bodenbereich der Seitenwand einen offenen Zugang 17 für das Wellenende bzw. Wellenstumpf 4 bildet und im Gehäuseflanschbereich 18 eine Abschlußwand 19 bildet. In einem Abstand, der dem Durchmesser des Wellenstumpfes 12 entspricht, zu der Abschlußwand 19 ist ein zur Nut 16 querverlaufender Schlitz 20 vorgesehen, in den das Ende 21 der Blattfeder 3 einschiebbar ist. Dadurch wird verhindert, daß der Klappbügel 2 aus den Lagerschalen 6 herausgleitet, indem die an den Seiten des Gehäuses 1 eingesetzte Blattfeder 3 derart in dem Gehäuse 1 eingebracht ist, daß die Federenden 7 der Blattfeder 3 die Zugangskanäle 8 der Lagerschalen 5 blockieren und die Achsstümpfe 4 somit im Gehäuse schwenkbar gelagert halten.

Die weitere Aufgabe der Blattfeder 3 ist es, die Klappöse 2 sowohl in der Ruhestellung, wie auch in der Gebrauchslage federnd einrasten zu lassen, was dadurch geschieht, daß durch den bogenartig vorgespannten Mittelteil 9 der Blattfeder 3, die ihrerseits von einer exzentrisch an dem Klappbügel 2 angeordneten verrundeten Spitze 9 beaufschlagt wird. Der Schwenkweg des Klappbügels 2 von beispielsweise 85° wird durch den Anschlagnocken 10, siehe Fig. 1B, der einstückig mit dem Gehäuse 1 ist, begrenzt. Fig. 1A und Fig. 2A wie auch die Fig. 2B und 2D lassen erkennen, daß der Boden 22 des Gehäuses 1 Bohrungen 23 zur Aufnahme von Befestigungsschrauben, nicht dargestellt, aufweist. Zur Erhöhung der Festigkeit können die Bereiche des Bodens 22, wo die Befestigungsschrauben eingesetzt werden sollen, durch Materialverstärkung oder Augen 24 verstärkt sein.

### Gewerbliche Auswertbarkeit

Die Erfindung ist im Fahrzeugbau gewerblich auswertbar.

### Bezugszeichenliste

- 1: wannenförmiges Gehäuse
- 2: Klappbügel, Klapphebel
- 3: Blattfeder
- 4: Achsstümpfe
- 5: Unterseite
- 6: Lagerschalen
- 7: Enden der Blattfeder
- 8: Blattfeder
- 9: Nase
- 10: Anschlagnocken
- 11: Seitenwand
- 12: Aufnahme
- 13: Ende
- 14: Klapphebelachse
- 15: Endbereich
- 16: Nut
- 17: Zugang
- 18: Gehäuseflansch
- 19: Abschlußwand
- 20: Schlitz
- 21: Ende
- 22: Boden
- 23: Bohrung
- 24: Auge
- 25: Anschlagfläche

## Patentansprüche

1. Öse (2) für einen Haltegurt, umfassend ein wannenförmiges Gehäuse (1), in dem ein Klappbügel (2) gegen Federkraft (3) ausklappbar gelagert ist, und eine Arretierungseinrichtung, die den Klappbügel (2) in ausgeklappter Stellung festhält, wobei die Federkraft von einer parallel zur Klapphebelachse (14) des Klappbügels angeordneten Blattfeder geliefert wird, die an einer von der Klapphebelachse vorspringenden Nase (9) des Klappbügels derart in Eingriff genommen wird, daß die Blattfeder (8) während eines ersten, größeren Teils des Klapphebelbewegungsweges zunehmend gespannt wird, und während eines daran anschließenden, kleineren Teils des Klapphebelbewegungsweges wieder geringfügig entspannt wird, **dadurch gekennzeichnet, dass** das Gehäuse (1) in zwei sich gegenüberliegenden Seitenwänden (11) als Lager dienende Aufnahmen (12) für die Enden (13) der Klapphebelachse (14) aufweist, und dass die Aufnahmen (12) jeweils an einem Endbereich (15) einer Nut (16) gebildet sind, die im Bodenbereich der Seitenwand (11) einen offenen Zugang (17) für das Wellenende (4) bildet und im Gehäuseflanschbereich (18) eine Abschlußwand (19) bildet, und dass im Abstand zu der Abschlußwand (19) ein zur Nut (16) quer verlaufender Schlitz (20) vorgesehen ist, in den das Ende (7) der Blattfeder (8) einsteckbar ist.

2. Öse nach Anspruch 1, **dadurch gekennzeichnet, dass** das Gehäuse (1) und der Klappbügel (2) gegenseitige Anschlagflächen (10, 25) bilden, die den Schwenkweg der Klappbügels (2) begrenzen, und dass die Anschlagfläche (10) des Gehäuses (1) von einem vom Gehäuseboden (22) getragenen Anschlagnocken (10) gebildet wird.

3. Öse nach Anspruch 1 oder 2, **dadurch gekennzeichnet, dass** der Boden (22) des Gehäuses (1) Bohrungen (23) zur Aufnahme von Befestigungsschrauben aufweist.

4. Öse nach Anspruch 3, **dadurch gekennzeichnet, dass** im Bereich der Bohrungen (23) Verstärkungsaugen (24) vorgesehen sind.

5. Öse nach einem der Ansprüche 1 bis 5, **dadurch gekennzeichnet, daß** das Gehäuse aus optional verchromtem Zinkdruckguß besteht.

## Claims

1. An eye (2) for a holding strap, including a trough-shaped housing (1) in which a hinged bracket (2) is arranged such that it can be folded outwardly against an elastic force (3), and a locking device which holds the hinged bracket (2) in the folded-out position, wherein the elastic force is supplied by a leaf spring that is disposed in parallel with the hinged lever axis (14) of the hinged bracket and that is engaged at a nose (9) of the hinged bracket, which nose is projecting from the hinged lever axis, such that the leaf spring (8) is increasingly tensioned during a first, larger part of the hinged lever motion path and is slightly relaxed again during a subsequent smaller part of the hinged lever motion path, **characterised in that**, in two opposing side walls (11), the housing (1) has receptacles (12) serving as bearings for the ends (13) of the hinged lever axis (14), and **in that** the receptacles (12) are each formed at an end area (15) of a groove (16) that forms an open access (17) for the shaft (4) in the bottom area of the side wall (11) and forms a terminating wall (19) in the housing flange area (18), and **in that** a slot (20) which runs transverse to the groove (16) and which is spaced apart from the terminating wall (19) is provided, in which the end (7) of the leaf spring (8) can be inserted.

2. The eye according to claim 1, **characterised in that** the housing (1) and the hinged bracket (2) form opposing impacting surfaces (10, 25) that limit the swivel path of the hinged bracket (2), and **in that** the impacting surface (10) of the housing (1) is formed by an impacting cam (10) carried by the housing bottom (22).

3. The eye according to claim 1 or 2, **characterised in that** the bottom (22) of the housing (1) has bores (23) for receiving fastening screws.

4. The eye according to claim 3, **characterised in that** strengthening lugs (24) are provided in the area of the bores (23).

5. The eye according to any of claims 1 to 5, **characterised in that** the housing consists of optionally chrome-plated zinc diecasting.

## Revendications

1. Boucle (2) pour une ceinture de sécurité, comprenant un boîtier (1) en forme de cuve dans lequel un étrier rabattant (2) est monté de manière à basculer à l'encontre d'une force de ressort (3), et un dispositif de blocage qui retient l'étrier rabattant (2) dans la position basculée, la force de ressort étant fournie par un ressort à lame agencé parallèlement à l'axe de levier de basculement (14) de l'étrier rabattant, lequel est mis en prise sur un ergot (9) de l'étrier rabattant, qui fait saillie depuis l'axe de levier de basculement, de telle sorte que le ressort à lame (8) est de plus en plus tendu pendant une première partie plus importante de la course de mouvement de levier de basculement, et à nouveau légèrement détendu pendant une plus petite partie qui suit, de la course de mouvement de levier de basculement, **caractérisée en ce que** le boîtier (1) présente dans deux parois latérales (11) opposées l'une à l'autre des logements (12) servant de paliers pour les extrémités (13) de l'axe de levier rabattant (14), et **en ce que** les logements (12) sont chacun formés sur une région d'extrémité (15) d'une gorge (16) qui forme dans la région de fond de la paroi latérale (11) un accès (17) ouvert pour l'extrémité d'arbre (4) et qui forme dans la région de bride de boîtier (18) une paroi de fermeture (19), et **en ce qu'**à distance de la paroi de fermeture (19) est prévue une fente (20) s'étendant transversalement à la gorge (16), dans laquelle l'extrémité (7) du ressort à lame (8) peut être enfichée.

2. Boucle selon la revendication 1, **caractérisée en ce que** le boîtier (1) et l'étrier rabattant (2) forment des surfaces de butée (10, 25) réciproquent qui délimitent la course de pivotement de l'étrier rabattant (2), et **en ce que** la surface de butée (10) du boîtier (1) est formée par une came de butée (10) portée par le fond de boîtier (22).

3. Boucle selon la revendication 1 ou 2, **caractérisée en ce que** le fond (22) du boîtier (1) présente des perçages (23) pour recevoir des vis de fixation.

4. Boucle selon la revendication 3, **caractérisée en ce que** dans la région des perçages (23) sont prévus des oeillets de renforcement (24).

5. Boucle selon l'une des revendications 1 à 4, **caractérisée en ce que** le boîtier est en zinc moulé sous pression chromé à titre optionnel.
